# EUROPÄISCHE PATENTSCHRIFT

(11) **EP 1 474 317 B1**
(45) Veröffentlichungstag und Bekanntmachung des Hinweises auf die Patenterteilung: **16.08.2006**
(21) Anmeldenummer: 02778970.0
(22) Anmeldetag: 09.10.2002
(51) Int. Cl.: B60R 21/26

(54) **KALTGASGENERATOR**
COLD GAS GENERATOR
GENERATEUR DE GAZ FROID

(30) Priorität: 14.02.2002 AT 962002 U; 24.07.2002 AT 11222002
(43) Veröffentlichungstag der Anmeldung: 10.11.2004
(60) Teilanmeldung: 06111253.8
(73) Patentinhaber: iSi Airbag GmbH, 1210 Wien (AT)
(72) Erfinder: SCHÄFER, Dietmar, A-1130 Wien (AT)
(74) Vertreter: KLIMENT & HENHAPEL
(86) Internationale Anmeldenummer: PCT/AT2002/000290
(87) Internationale Veröffentlichungsnummer: WO 2003/068567

(56) Entgegenhaltungen:
- WO-A1-03/051685
- GB-A- 2 312 274
- US-A- 5 593 180
- US-A- 5 984 351
- US-B1- 6 244 622

## Beschreibung

Die vorliegende Erfindung bezieht sich auf einen Kaltgasgenerator zum Aufblasen eines Gassacks (Airbags) gemäß Oberbegriff des Anspruchs 1. Diese Merkmale sind aus der am 26.6.2003 veröffentlichten WO-A-03/051685 bekannt.

Solche Gasgeneratoren dienen dazu, mit gespeichertem Gas im Funktionsfall einen verbundenen Gassack, beispielsweise ein Airbag in einem Auto, aufzublasen.

Ein bei der Befüllung von Airbags auftretendes Problem ist die hohe Temperaturentwicklung die insbesondere bei pyrotechnisch generiertem Gas auftritt, was neben der Gefährdung der Insassen auch die thermische Zerstörung des Gassacks mit sich ziehen kann.

Von Hybridgasgeneratoren, die sowohl über eine pyrotechnische Treibladung als auch über eine Kaltgasquelle in Form eines Gasspeichers verfügen ist bekannt, dass der Heißgasstrom einer pyrotechnischen Treibladung ein den Gasbehälter verschließendes Dichtelement durchbrennt. Diese Treibladung wird üblicherweise von einer Zündpille (ein mit einer Ummantelung versehener Anzünder, der in seinem Inneren eine geringe Menge einer pyrotechnischen Zündladung enthält, die über in die Treibladung geführte Zündpins, an die von außen eine elektrische Spannung angelegt wird, zündbar ist) gezündet, die mit einer Ladung von ca. 100mg pyrotechnischem Material keinen signifikanten Einfluss auf die Leistung eines Gasgenerators besitzt. Ein solcher Hybridgasgenerator ist beispielsweise in der EP 699.231 A1 offenbart.

Es sind auch Kaltgasgeneratoren bekannt, die auf den Einsatz einer zusätzlichen Treibgasladung verzichten und ausschließlich eine Zündpille zur Zerstörung des Dichtelements verwenden. Dies hat den Vorteil, dass durch das Weglassen der zusätzlichen Treibgasladung die Temperatur des Gases im Gassack auf das thermodynamische Verhalten des eingesetzten Gases im Gasdruckbehälter reduziert wird, wodurch dieses damit quasi kalt vorliegt. Weiters wird der Anfall von giftigen Reststoffen vermieden, die im Zusammenhang mit dem Abbrand von zusätzlichen pyrotechnischen Treibladungen entstehen. Ein solcher Kaltgasgenerator ist beispielsweise in der DE 100 38 673 A1 offenbart. Dort wird der durch die Zündpille generierte Heißgasstrom in einem kleinen, abgeschlossenen Raum direkt auf das Dichtelement, eine Membran, gelenkt. Durch die Zündung der Zündpille in einem abgeschlossenen Raum entsteht eine Druck- bzw. Schockwelle, die das Dichtelement zerstört. Um diesen kleinen, abgeschlossenen Raum, dessen eine Seite durch das Dichtelement begrenzt ist, zu fertigen, sind durch den Kontakt mit dem unter Druck stehenden Dichtelement hohe Anforderungen an die rohrförmige Abstützung gegeben, was eine unnötig aufwendige Fertigung mit sich bringt. Weiters bedingt der strömungsdynamisch komplexe ringförmige Abströmungsquerschnitt, der nach der Zerstörung des Dichtelements entstehen soll, eine Unsicherheit in Bezug auf die Reproduzierbarkeit des Öffnungsverhaltens. Ein weiterer Nachteil ist, dass die Befüllung und damit auch die Prüfung des Gasdruckbehälters erst nach dem kompletten Zusammenbau des Kaltgasgenerators erfolgen kann, da das Dichtelement ohne zusätzlich Abstützung dem Innendruck des Gasdruckbehälters nicht standhalten würde.

Ziel der vorliegenden Erfindung ist es, einen Kaltgasgenerator zu schaffen, der einen im Aufbau einfachen und äußerst zuverlässigen Öffnungsmechanismus aufweist und gleichzeitig hohe Sicherheit für die Insassen bietet und den Gassack schonend, ohne Gefahr der Zerstörung, aufbläst.

Es ist ein weiteres Ziel der vorliegenden Erfindung einen Kaltgasgenerator zu vorzusehen, der eine flexible Fertigung zulässt in dem die Befüllung und Prüfung des Gasdruckbehälters zu einem beliebigen Zeitpunkt ohne vorherigen Komplettzusammenbau des Kaltgasgenerators möglich ist.

Erfindungsgemäß wird dieses Ziel durch die Merkmale des Anspruchs 1 erreicht.

Dadurch sind bei der Fertigung des Kaltgasgenerators keine anderen Komponenten an der belasteten Membran im Eingriff, was die Produktsicherheit erhöht.
Durch die zentrale Zerstörung der Membran ergibt sich ein zuverlässig reproduzierbarer Abströmungsquerschnitt. Die Membran ist auch ohne Abstützung dicht und nicht der Gefahr der Beschädigung und damit Zerstörung ausgesetzt, so dass bei der Fertigung des Kaltgasgenerators die Befüllung und Prüfung des Gasdruckbehälters nicht unbedingt als letztes erfolgen muss.

Der definierte Abstand zwischen Ausströmöffnung und Austrittsöffnung der Düsenkammer bewirkt eine verlässliche Zerstörung der Membran unter allen Umständen.

Im Anschluss erfolgt nun eine detaillierte Beschreibung der Erfindung. Dabei zeigt
- Fig.1: eine Schnittansicht im Schrägriss eines erfindungsgemäßen Öffnungsmechanismus für einen Kaltgasgenerator mit axialem Gasaustritt
- Fig.2: eine Schnittansicht einer Ausführungsform eines erfindungsgemäßen Öffnungsmechanismus für einen Kaltgasgenerator mit axialem Gasaustritt
- Fig.3: eine Schnittansicht im Schrägriss eines erfindungsgemäßen Öffnungsmechanismus für einen Kaltgasgenerator mit radialem Gasaustritt
- Fig.4: eine Schnittansicht einer Ausführungsform eines erfindungsgemäßen Öffnungsmechanismus für einen Kaltgasgenerator mit radialem Gasaustritt
- Fig.5: eine Schnittansicht einer bekannten Zündpille

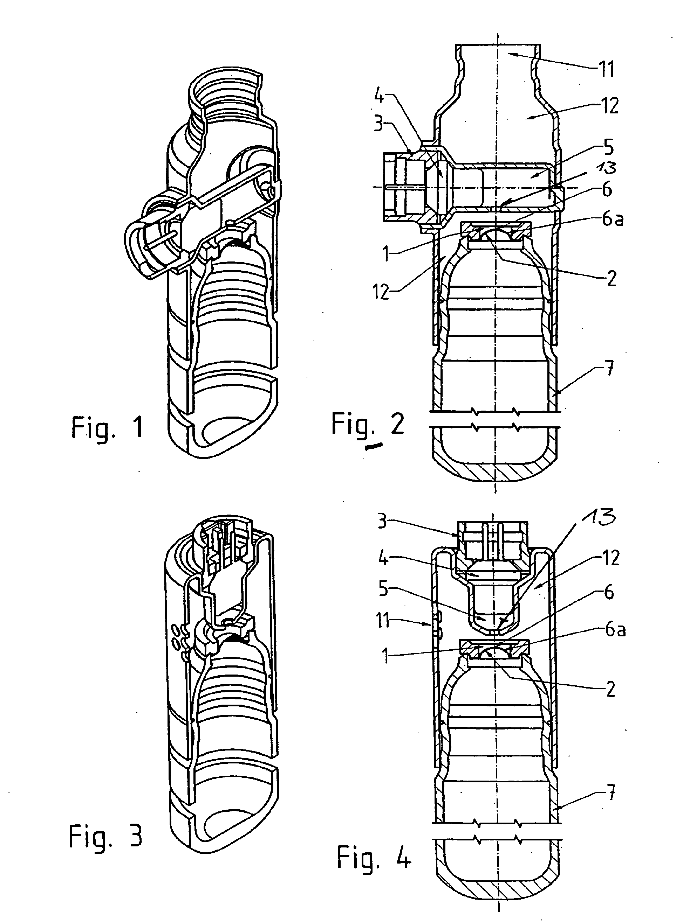

Fig.1,2,3,4 zeigen einen Kaltgasgenerator mit einem erfindungsgemäßen Öffnungsmechanismus, wobei in Fig. 1 und 2 eine Abströmung des freigesetzten Gases in axialer Richtung möglich ist und in Fig.3 und 4 dies in radialer Richtung möglich ist. Im Bereich oberhalb der Ausströmöffnung 1 des Gasspeichers ist der Öffnungsmechanismus angeordnet, welcher zur Zerstörung der Membran 2 dient und im wesentlichen aus einer Zündpillenhalterung 3, einer Zündpille 4 und einer Düsenkammer 5 besteht.

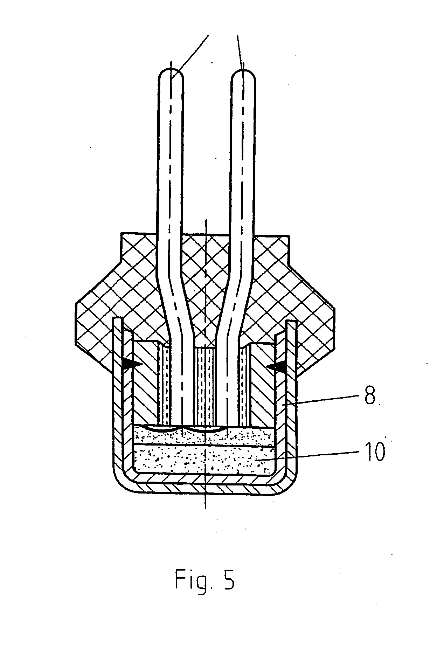

Bei der Zündpille 4 handelt es sich um einen seit langem bekannten Anzünder, dessen wesentlicher Aufbau eine geringe Menge Zündladung 10 in einem Gehäuse 8 aufweist. In die Zündladung 10 sind von außerhalb der Zündpille 4 elektrisch kontaktierbare Zündpins 9 geführt, welche nach Anlegen einer Spannung die Zündladung 10 zünden (siehe Fig.5).

Soll der Gassack, insbesondere der Airbag aufgeblasen werden, wird, wie erwähnt, zuerst die Zündpille 4 durch Anlegen eines elektrischen Zündimpulses gezündet. Die Energiefreisetzung wird in der Düsenkammer 5 gebündelt und als Heißgasstrahl konzentriert auf den höchsten Punkt 6 der Membran 2 geleitet, welche die Ausströmöffnung 1 des Gasspeichers 7 verschließt. An diesem Punkt 6 tritt im Zuge der Druckbelastung der Membran 2 durch die Gasfüllung die höchste Spannung auf, wodurch sich dort ihre dünnste Stelle ergibt. Da der Werkstoff der Membran 2 bei Temperatureinwirkung stark an Festigkeit verliert bewirkt die partielle Erhitzung durch den gebündelten Heißgasstrahl eine Schwächung und damit die Zerstörung der unter Last stehenden Membran 2 im Bereich des angeströmten Punktes 6. Die Dynamik des entweichenden, stark komprimierten Gas im Gasspeicher 7 bewirkt in Folge die vollständige Freilegung der Ausströmöffnung 1.

Eine Zerstörung des Dichtelements durch eine Druck- bzw. Schockwelle, wozu ein kleiner, abgeschlossener Raum erforderlich ist, ist im vorliegenden Fall nicht gewünscht. Es ist vollkommen ausreichend, den Heißgasstrom über die Düsenkammer gebündelt auf das Dichtelement zu fokussieren. Das Dichtelement kann dabei vollkommen frei liegen. Eine zusätzliche Abstützung ist nicht erforderlich. Die Zerstörung des Dichtelements erfolgt durch thermische Schwächung. Der Innendruck des Gasdruckbehälters zerstört dann das thermisch geschwächte Dichtelement.

Um die Auslösesicherheit nochmals zu erhöhen und damit die Versagenswahrscheinlichkeit zu minimieren, ist vorgesehen, dass der Abstand zwischen dem obersten Punkt der Membran 2 und der Austrittsöffnung (13) der Düsenkammer 5 kleiner oder gleich dem Durchmesser der Ausströmöffnung 1 also dem druckbelasteten Querschnitt der Membran (2) ist. Somit ist die vollständige Zerstörung der Membran auch durch Einsatz einer herkömmlichen Zündpille, die lediglich einen geringen Heißgasstrom erzeugen kann, gewährleistet.

## Patentansprüche

1. Kaltgasgenerator zum Aufblasen eines Gassacks mit Hilfe eines aus einem Gasdruckbehälter (7) ausströmenden Gases, wobei der Gasdruckbehälter (7) mit einer Ausströmöffnung (1) versehen ist, welche mittels einer zerstörbaren, bezogen auf das gespeicherte Gas in die entgegengesetzte Richtung gewölbten Membran (2) verschlossen ist, wobei die Zerstörung der Membran (2) durch einen auf die Membran (2) gerichteten Heißgasstrahl erfolgt, der ausschließlich durch Zündung einer durch Anlegen eines elektrischen Impulses aktivierbaren Zündpille (4) erzeugt wird und im befüllten Zustand des Gasdruckbehälters (7) jene diesem abgewandte Oberfläche (6a) der Membran (2) zur Gänze und freiliegend in einen über mindestens eine Auslassöffnung (11) mit dem Gassack in Verbindung stehenden Raum (12) gerichtet ist, durch welchen der auf die Membran (2) über eine Düsenkammer (5) fokussierte Heißgasstrahl geleitet wird, **dadurch gekennzeichnet, dass** der Abstand zwischen dem obersten Punkt der Membran (2) und der Austrittsöffnung (13) der Düsenkammer (5) kleiner oder gleich dem Durchmesser der Ausströmöffnung (1) ist.

2. Kaltgasgenerator nach Anspruch 1, **dadurch gekennzeichnet, dass** die Zündpille (4) eine von einem Gehäuse (8) umschlossene Treibladung (10) umfasst, welche über in diese geführte Zündpins (9) zündbar ist.

3. Kaltgasgenerator nach Anspruch 1 oder 2, **dadurch gekennzeichnet, dass** die Membran aus einem Werkstoff mit einer Zugfestigkeit von mehr als 850 N/mm gefertigt ist.

4. Kaltgasgenerator nach einem der Ansprüche 1 bis 3, **dadurch gekennzeichnet, dass** die Austrittsöffnung für den Austritt des Heißgases aus der Düsenkammer (5) an einer eine Seitenwand der Zündpille (4) im wesentlichen verlängernden Wand der Düsenkammer (5) angeordnet ist.

## Claims

1. A cold gas generator for inflating a gas bag with the help of a gas flowing out of a gas pressure vessel (7), with the gas pressure vessel (7) being provided with a discharge opening (1) which is closed off by means of a destructible membrane (2) which is arched in a direction which is opposite relative to the stored gas, with the destruction of the membrane (2) occurring by a hot gas jet aimed at the membrane (2), which jet is exclusively produced by the ignition of a primer (4) which can be activated by the application of an electric pulse, whereas in the filled state of the gas pressure vessel (7) the surface (6a) of the membrane (2) which is averted from the same is directed fully and in an exposed manner into a room (12) which is in connection with the gas bag via at least one discharge opening (11) and through which the hot gas jet is guided which is focused on the membrane (2) via a nozzle chamber (5), **characterized in that** the distance between the uppermost point of the membrane (2) and the discharge opening (13) of the nozzle chamber (5) is smaller than or equal to the diameter of the discharge opening (1).

2. A cold gas generator as claimed in claim 1, **characterized in that** the primer (4) comprises a propelling charge (10) enclosed by a housing (8), which charge can be ignited via ignition pins (9) guided into the same.

3. A cold gas generator as claimed in claim 1 and 2, **characterized in that** the membrane is made of a material with a tensile strength of more than 850 N/mm².

4. A cold gas generator as claimed in one of the claims 1 to 3, **characterized in that** the discharge opening (13) for discharging the hot gas jet out of the nozzle chamber (5) is located on a wall of the nozzle chamber (5) which is basically elongating a side wall of the primer (4).

## Revendications

1. Générateur de gaz froid pour le gonflage d'un sac de gaz à l'aide d'un gaz sortant d'un réservoir de gaz sous pression (7), dans lequel le réservoir de gaz sous pression (7) est doté d'une ouverture de sortie (1) qui est obturée au moyen d'une membrane (2) destructible bombée dans la direction opposée au gaz emmagasiné, la destruction de la membrane (2) étant provoquée par un jet de gaz chaud dirigé vers la membrane (2), lequel est produit exclusivement par allumage d'une pastille d'amorce (4) pouvant être activée par une impulsion électrique et, dans l'état de remplissage du réservoir de gaz sous pression (7), la surface (6a) de la membrane (2) tournée vers celui-ci étant entièrement dirigée entièrement et dégagée dans un espace (12) communiquant par au moins une ouverture d'éjection (11) avec le sac de gaz, à travers lequel le jet de gaz chaud concentré par une chambre de buse (5) est dirigé vers la membrane (2), **caractérisé en ce que** la distance entre le point le plus haut de la membrane (2) et l'ouverture de sortie (13) de la chambre de buse (5) est inférieure ou égale au diamètre de l'ouverture de sortie (1).

2. Générateur de gaz froid selon la revendication 1, **caractérisé en ce que** la pastille d'amorce (4) comprend une charge propulsive (10) enfermée dans un boîtier (8), qui peut être mise à feu par la broche d'allumage (9) introduite à l'intérieur.

3. Générateur de gaz froid selon la revendication 1 ou 2, **caractérisé en ce que** la membrane est faite d'un matériau ayant une résistance à la traction supérieure à 850 N/mm.

4. Générateur de gaz froid selon l'une quelconque des revendications 1 à 3, **caractérisé en ce que** l'ouverture de sortie (13) pour la sortie du gaz chaud hors de la chambre de buse (5) est disposée sur une paroi de la chambre de buse (5) située sensiblement dans le prolongement d'une paroi latérale de la pastille d'amorce (4).
